# EUROPÄISCHE PATENTSCHRIFT

(11) **EP 0 824 245 B1**
(45) Veröffentlichungstag und Bekanntmachung des Hinweises auf die Patenterteilung: **19.05.2004**
(21) Anmeldenummer: 97810471.9
(22) Anmeldetag: 14.07.1997
(51) Int. Cl.: G06K 19/077

(54) **Bewegliches Objekt mit elektronisch gespeicherten berührungslos auslesbaren und/oder überschreibbaren Daten**
Mobile object carrying electronic data which can read and/or write contactlessly
Objet mobile à données électroniques mémorisées pouvant être lues et/ou enregistrées sans contact

(30) Priorität: 09.08.1996 CH 195596; 28.08.1996 CH 211896
(43) Veröffentlichungstag der Anmeldung: 18.02.1998
(60) Teilanmeldung: 03000500.3
(73) Patentinhaber: Ferag AG, 8340 Hinwil (CH)
(72) Erfinder: Maeder, Carl Conrad, 8340 Hinwil (CH)
(74) Vertreter: Frei, Alexandra Sarah

(56) Entgegenhaltungen:
- EP-A- 0 565 022
- WO-A-93/12513
- WO-A-96/10803

## Beschreibung

Die Erfindung betrifft ein bewegliches Objekt nach dem Oberbegriff des unabhängigen Patentanspruchs. Das Objekt trägt elektronisch gespeicherte Daten, die durch ein Schreib/Lesegerät mit einer Hauptleserichtung berührungslos auslesbar und/oder berührungslos überschreibbar sind.

In den verschiedensten Anwendungsbereichen wie Fabrikation, Unterhalt, Analytik, Lagerhaltung etc. wird es mehr und mehr wünschenswert, bewegliche Objekte mit automatisch lesbaren Kennzeichnungen zu versehen. Derartige Kennzeichnungen dienen beispielsweise der automatischen Identifikation der Objekte. Automatisch lesbare Kennzeichnungen sind beispielsweise mit optischen Geräten erfassbare Markierungen oder elektronisch gespeicherte Daten.

Optische Markierungen sind beispielsweise Strichcodes. Das Lesen erfolgt berührungslos, wobei zwischen Markierung und Lesegerät ein als Bereich vorgegebener Leseabstand und Lesewinkel einzuhalten sind und wobei die Markierung sichtbar sein muss, das heisst nicht von einem undurchsichtigen Medium vom Lesegerät getrennt sein darf.

Elektronisch gespeicherte Daten sind beispielsweise in einer entsprechenden integrierten Schaltung gespeichert, welche Schaltung am zu kennzeichnenden Objekt angebracht ist. Derartige Schaltungen werden zum Auslesen der darin gespeicherten Daten mit einem Lesegerät oder der Sonde eines solchen Gerätes kontaktiert oder sie weisen eine Antenne auf und die gespeicherten Daten können dann mit einem entsprechend ausgerüsteten Lesegerät berührungslos ausgelesen werden. Schaltung, Antenne und Lesegerät können dabei derart ausgestaltet sein, dass die Daten, die in der Schaltung gespeichert sind, durch das Gerät nicht nur lesbar sondern auch überschreibbar sind (Schreib/Lesegerät) und auch derart, dass die für das Auslesen oder Überschreiben in der Schaltung gebrauchte Energie ebenfalls berührungslos vom Gerät auf die Schaltung übertragbar ist, sodass für die Schaltung keine spezielle Energiequelle (z.B. Batterie) vorzusehen ist.

Im Unterschied zu optischen Markierungen können elektronisch gespeicherte Daten neben einer Identifikationsfunktion auch Steuerfunktionen übernehmen, das heisst, es können mit Hilfe derartiger Daten entsprechend ausgerüstete Vorrichtungen direkt angesteuert werden.

Für eine Datenübertragung mit Kontaktierung, ist eine genau bestimmte relative Position von Schreib/Lesegerät und Objekt zu erstellen. Eine berührungslose Datenübertragung ist je nach Ausgestaltung von Schaltung, Antenne und Schreib/Lesegerät in mehr oder weniger frei wählbaren relativen Positionen von Objekt und Schreib/Lesegerät möglich. Offensichtlich ist es aber so, dass es in einem System mit einer hohen Freiheit bezüglich Lese/Schreib-Position schwieriger oder nicht mehr möglich ist, ohne weitere Hilfsmittel die Datenübertragung auf ein spezifisches Objekt zu beschränken oder Datenübertragung und Lokalität des Objektes funktionell zu verknüpfen (Lokalisierung von Objekten und/oder Übernahme von Steuerfunktionen durch Objekte, die sich in einer spezifischen Lokalität aufhalten).

Objekte, die berührungslos auslesbare Daten tragen sind beispielsweise beschrieben in den Publikationen EP-5 650 22 WO-93/12513 oder WO-96/10803.

Es ist nun die Aufgabe der Erfindung, Objekte mit elektronisch gespeicherten Daten zu schaffen, derart, dass die Daten berührungslos auslesbar und/oder überschreibbar sind, wobei eine hohe Freiheit bezüglich relativer Position zwischen einem Schreib/Lesegerät und dem Objekt gewährleistet sein soll und wobei es möglich sein soll, die Lokalität des Objektes funktionell zu erfassen.

Diese Aufgabe wird gelöst durch das Objekt, wie es in den Patentansprüchen definiert ist.

Das erfindungsgemässe Qbjekt weist eine integrierte Schaltung auf, in der Daten elektronisch speicherbar sind, und eine Antenne. Die Antenne besteht im wesentlichen aus einer Leiterschlaufe (Antennenschlaufe), die durch die integrierte Schaltung geschlossen ist und durch die eine Antennenfläche aufgespannt wird. Für einen Schreib- oder Lesevorgang wird das Objekt relativ zu einem Schreib/Lesegerät mit einer Hauptleserichtung derart angeordnet, dass die Hauptleserichtung des Gerätes die Antennenfläche senkrecht oder schief durchdringt (nicht parallel dazu ausgerichtet ist), wobei während dem Schreib/Lesevorgang Objekt und Schreib/Lesegerät stationär sein können oder sich relativ zueinander bewegen.

Die Antennenschlaufe bzw. die Antennenfläche ist derart ausgestaltet und angeordnet, dass in einer Lokalität, in der ein Schreib/Lesevorgang stattfinden soll, dieser ohne Veränderung der Hauptleserichtung des Schreib/Lesegerätes durchführbar ist für möglichst alle in dieser Lokalität gleichwertigen Objektpositionen. Das heisst mit anderen Worten, dass eine im wesentlichen unveränderte Hauptleserichtung die Antennenfläche durchdringt, unabhängig davon, welche der gleichwertigen Positionen das Objekt einnimmt. Unter gleichwertigen Objektpositionen sind eine Mehrzahl von Positionen zu verstehen, in denen das Objekt in der Schreib/Leselokalität aus den Schreib/Lesevorgang nicht betreffenden Gründen auftreten kann.

Die Leiterschlaufe ist derart ausgestaltet, dass sie nur in bestimmten Zuständen des Objektes geschlossen ist, das heisst, dass die Daten eines Objektes nur in bestimmten Zuständen des Objektes überschreib- bzw. lesbar sind.

Beispiele von Ausführungsformen des erfindungsgemässen Objekts und vorteilhafte Ausführungsformen von Antennen dafür sind im Detail beschrieben im Zusammenhang mit den folgenden Figuren. Diese zeigen:
- **Figuren 1 und 2**: zwei bevorzugte Ausführungsformen von Verbindungsstücken zur Verbindung von integrierter Schaltung und Antennenschlaufe;
- **Figuren 3 und 4**: zwei beispielhafte Ausführungsformen des erfindungsgemässen Objekts.

Die Antennenschlaufe 5 ist ein elektrischer Leiter, dessen Enden auf beiden Seiten einer Lücke positioniert und mit der integrierten Schaltung und gegebenenfalls mit weiteren elektronischen Funktionselementen (z.B. Kondensator für Abstimmung oder Energiespeicherung oder Widerstand für Dämpfung) leitend verbunden sind. Dabei sind die integrierte Schaltung und die weiteren Elemente vorteilhafterweise direkt in der Lücke zwischen den Schlaufenenden, beispielsweise auf einem entsprechenden Verbindungsstück 6 angeordnet.

Die Antennenschlaufe besteht beispielsweise aus einem Draht oder Kabel oder aus einem Metallband, das im wesentlichen senkrecht zur von der Antenne aufgespannten Antennenfläche angeordnet ist.

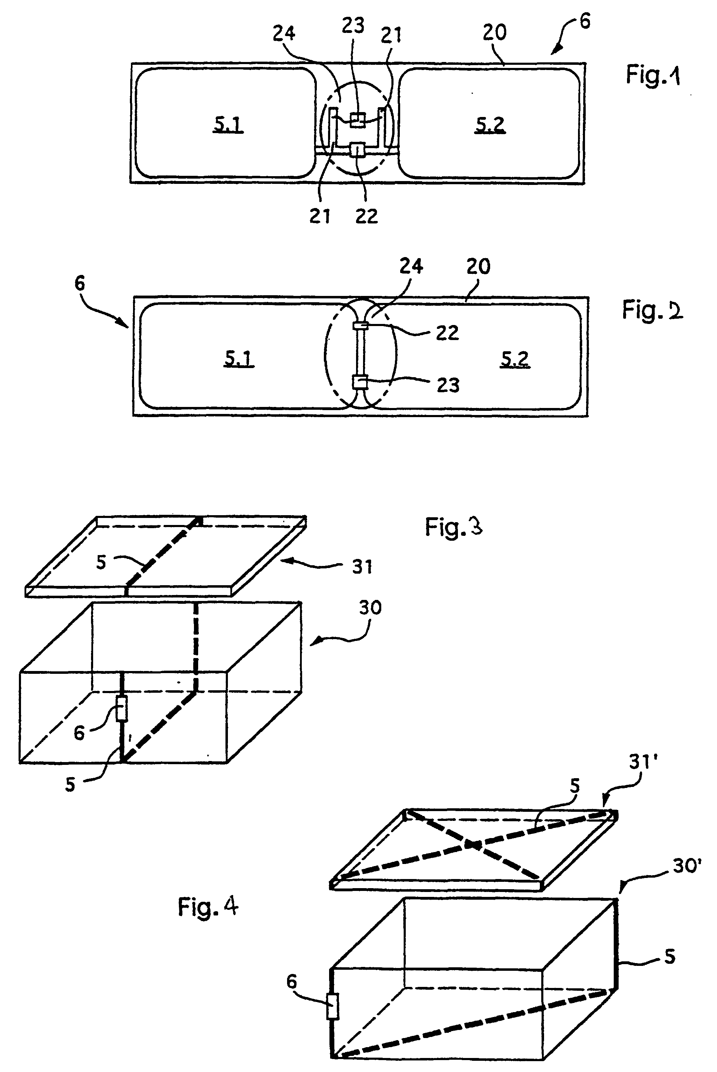

**Figuren 1 und 2** zeigen bevorzugte Ausführungsformen von Verbindungsstücken 6. Ein derartiges Verbindungsstück 6 ist als gedruckte Schaltung auf einem steifen oder flexiblen Träger ausgestaltet, welche gedruckte Schaltung mit der integrierten Schaltung und gegebenenfalls mit weiteren elektronischen Funktionseinheiten (z.B. Kondensator zur Abstimmung oder Energiespeicherung oder Widerstand zur Dämpfung) bestückt ist.

Das Verbindungsstück gemäss Figur 7 weist auf einem Träger 20 eine gedruckte Schaltung mit zwei Schlaufenanschlussbereichen 5.1 und 52 und dazwischen angeordneten, weiteren Leitern 21 auf. Diese sind derart beispielsweise mit einem Kondensator 22 und der integrierten Schaltung 23 bestückt, dass Kondensator und integrierte Schaltung parallel zueinander mit den Schlaufenanschlussbereichen 5.1 und 5.2 verbunden sind. Vorteilhafterweise wird der Bereich zwischen den Schlaufenanschlussbereichen 5.1 und 5.2 mit einem Schutzlack 24 überdeckt.

Das Verbindungsstück 6 gemäss Figur 8 unterscheidet sich vom Verbindungsstück gemäss Figur 7 durch das Fehlen der weiteren Leiter 21, wodurch das Verbindungsstück denkbar einfach wird. Die gedruckte Schaltung weist lediglich zwei Schlaufenanschlussbereiche 5.1 und 5.2 auf, die durch einen derart kleinen Abstand voneinander beabstandet sind, dass sowohl der Kondensator 22 als auch die integrierte Schaltung 23 direkt mit den Schlaufenanschlussbereichen 5.1 und 5.2 mit einem leitenden Kleber verklebt oder entsprechend verlötet werden können.

Typische Masse für das Verbindungsstück 6: Dicke der Leiterbereiche (5.1, 5.2, 21): 20 bis 35 µm, Breite der Schlaufenanschlussbereiche (5.1 und 5.2): 20 bis 40 mm, Dicke des starren oder flexiblen Trägers (20): 20 bis 50 µm.

Für die Montage von Leiterschlaufe 5 und Verbindungsstück 6 an einem Objekt, werden vorteilhafterweise Verbindungsstücke 6 verwendet, auf deren Schlaufenanschlussbereiche 5.1 und 5.2 elektrisch leitende, beidseitig klebende Folienstücke geklebt sind, deren Aussenseite mit einer abschälbaren Schutzfolie bedeckt ist. Die Leiterschlaufe wird in Form eines Drahtes oder Metallbandes oder in Form einer leitenden Beschichtung auf dem Objekt aufgebracht. Dann werden die Schutzfolien von den Schlaufenanschlussbereichen des Verbindungsstückes entfernt und wird dieses derart über die Lücke zwischen den Schlaufenenden geklebt, dass die beiden Schlaufenenden mit den Schlaufenanschlussbereichen kontaktiert sind.

Selbstverständlich ist es auch denkbar, dass in derselben Art, wie in den Figuren 1 und 2 für ein Verbindungsstück gezeigt, die ganze Antenne hergestellt wird, indem von den Schlaufenanschlussbereichen 5.1 und 5.2 mindestens der eine bedeutend länger ausgebildet ist, derart, dass die beiden Schlaufenanschlussbereiche die ganze Länge der Schlaufe darstellen. Für eine Montage wird ein derartig verlängertes Verbindungsstück um ein Objekt geklebt und werden dessen Endbereiche mit geeigneten Mitteln leitend miteinander verbunden.

**Figuren 3 und 4** zeigen als Beispiele von Objekten Behälter 30 und 30' mit Deckeln 31 und 31' wie sie beispielsweise für Lagerhaltung oder Versand anwendbar sind.

Der Behälter gemäss **Figur 3** weist beispielsweise eine Schlaufe 5 auf, die auf der Aussenseite des Behälters 30 auf einer Behälterwand, auf dem Behälterboden und der gegenüberliegenden Behälterwand verläuft und sich auf der Innenseite des Deckels 31 fortsetzt. Nur mit aufgesetztem Deckel 31 ist die Schlaufe geschlossen und werden die gespeicherten Daten les- bzw. überschreibbar.

Der Behälter 30 hat beispielsweise einen rechteckigen Boden. Ist die Antennenfläche mittig angeordnet, kann der Deckel 31 in beiden möglichen Positionen aufgesetzt werden und in beiden Fällen wird durch das Aufsetzen des Deckels die Antennenschlaufe 5 geschlossen. Für einen Schreib/Lesevorgang kann der Behälter 30/31 relativ zu einem Schreib/Lesegerät mit einer im wesentlichen parallel zum Behälterboden ausgerichteten Hauptleserichtung beliebige, auf dem Boden stehende Positionen einnehmen, ausser derart, dass Hauptleserichtung und Antennenfläche parallel zueinander sind. Insbesondere können die Behälter beliebig um 180° gedreht werden, was die Lage der Antennenfläche nicht verändert.

**Figur 4** zeigt einen Behälter 30' mit Deckel 31', die den in Figur 3 dargestellten Behälter mit Deckel (30/31) sehr ähnlich sind. Der Unterschied besteht darin, dass im Behälter gemäss Figur 4 die Antennenfläche senkrecht zur Bodenfläche und diagonal zu dieser verläuft. Damit der Deckel 31' in beiden möglichen Positionen auf dem offenen Behälter aufsetzbar ist, ohne dass dies auf die Antenne einen Einfluss hat, kann der Schlaufenteil des Deckels 31' doppelt ausgeführt sein, wobei er entlang beider Diagonalen verläuft. Es ist auch denkbar, dass anstelle des Schlaufenteils des Deckels derjenige des Behälters doppelt (auf beiden Diagonalen) ausgeführt ist.

Wird eine Gruppe von Behältern, wie einer in der Figur 4 dargestellt ist, in einer Linie auf einer im wesentlichen waagrechten Unterlage aufgereiht und von einem Schreib/Lesegerät inspiziert (beispielsweise durch Vorbeiführen an einem stationären derartigen Gerät), wobei die Hauptleserichtung im wesentlichen waagrecht und quer gegen die Behälterreihe gerichtet ist, werden alle Behälter erfasst unabhängig von der Position ihrer Wände und unabhängig von verschiedenen Behältergrössen, wenn ihre Deckel aufgesetzt sind. Einzig Behälter, die mit der Bodendiagonale parallel zur Hauptleserichtung ausgerichtet sind, können nicht erfasst werden (Antennenfläche parallel zur Hauptleserichtung). Eine derartige Position kann aber durch leichtes Stossen gegen eine parallel zur Behälterreihe verlaufende Wand leicht verhindert werden.

## Patentansprüche

1. Bewegliches Objekt, das in einer integrierten Schaltung (23) gespeicherte Daten und eine Antenne trägt, wobei die Daten mit einem Lese- und/oder Schreibgerät (10) mit einer Hauptleserichtung (L) berührungslos auslesbar bzw. überschreibbar sind, wobei die Antenne als Antennenschlaufe (5) ausgebildet ist, die eine Lücke zwischen zwei Schlaufenenden aufweist, wobei die genannten Schlaufenenden mit der integrierten Schaltung (23) verbunden sind, wobei durch die Antennenschlaufe (5) eine Antennenfläche aufgespannt wird und wobei das Objekt relativ zu dem Lese- und/oder Schreibgerät (10) derart positionierbar ist, dass die Hauptleserichtung (L) die Antennenfläche senkrecht oder schief durchdringt, **dadurch gekennzeichnet, dass** das Objekt ein Behälter (30, 30') mit Deckel (31, 31') ist und dass ein Teil der Schlaufe (5) am Deckel (31, 31') und ein anderer Teil der Schlaufe (5) am Behälter (30, 30') derart angeordnet sind, dass die beiden Schlaufenteile miteinander kontaktiert und sind, wenn der Behälter mit dem Dekel geschlossen ist und die Schlaufe (5) unterbrochen ist, wenn der Behälter nicht geschlossen ist.

2. Objekt nach Anspruch 1, **dadurch gekennzeichnet, dass** der Behälter mit Deckel (30/31, 30'/31') einen rechteckigen oder quadratischen Boden aufweist und dass die Schlaufe (5) derart angeordnet ist, dass die Antennenfläche senkrecht auf dem Behälterboden steht und parallel zu zwei Kanten des Bodens oder auf eine Diagonale des Bodens ausgerichtet ist.

3. Objekt nach Anspruch 2, **dadurch gekennzeichnet, dass** der Deckel (31') vom Behälter (30') entfernbar ist, dass die Antennenfläche auf eine Diagonale des Behälterbodens ausgerichtet ist und dass der Behälter (30') oder der Deckel (31') zwei Schlaufenteile aufweist, die auf je einer Diagonalen über den Behälterboden bzw. über den Deckel laufen.

4. Objekt nach einem der Ansprüche 1 bis 3, **dadurch gekennzeichnet, dass** die integrierte Schaltung (23) in der Lücke der Antennenschlaufe (5) angeordnet ist.

5. Objekt nach Anspruch 4, **dadurch gekennzeichnet, dass** die integrierte Schaltung (23) auf einem Verbindungsstück (6) angeordnet ist, welches Verbindungsstück (6) ferner zwei voneinander beabstandete Schlaufenanschlussbereiche (5.1 und 5.2) aufweist.

6. Objekt nach Anspruch 5, **dadurch gekennzeichnet, dass** das Verbindungsstück (6) eine auf einem flexiblen oder starren Träger (20) angeordnete gedruckte Schaltung ist, die mindestens mit der integrierten Schaltung (23) bestückt ist.

7. Objekt nach einem der Ansprüche 5 oder 6, **dadurch gekennzeichnet, dass** die Schlaufenanschlussbereiche (5.1 und 5.2) genügend lang ausgestaltet sind, um einen der beiden Schlaufenteile zu bilden.

8. Objekt nach einem der Ansprüche 1 bis 7, **dadurch gekennzeichnet, dass** die Schlaufe (5) aus einem Metallband besteht, das im wesentlichen senkrecht zur Antennenfläche angeordnet ist.

## Claims

1. Movable object carrying data stored in an integrated circuit (23) and an antenna, wherein the data is readable or overwriteable respectively without contact by a reading and/or writing device (10) having a main reading direction (L), wherein the antenna is designed as an antenna loop (5) which defines a gap between two loop ends, wherein the loop ends are contacted with the integrated circuit (23), wherein the antenna loop defines an antenna area and wherein the object is positionable in relation to the reading and/or writing device such that the main reading direction (L) penetrates the antenna area vertically or obliquely **characterized in that** the object is a container (30, 30') with a cover (31, 31') and that one part of the loop (5) is arranged on the cover (31, 31') and another part of the loop (5) is arranged on the container (30, 30') such that the two parts of the loop are in contact, when the container is closed with the cover and the loop (5) is interrupted, when the container is not closed.

2. Object according to claim 1, **characterized in that** the container with cover (30/31, 30'/31') comprises a rectangular or square floor and that the loop (5) is arranged such that the antenna area is perpendicular to the container floor and parallel to two edges of the container floor or aligned to one diagonal of the container floor.

3. Object according to claim 2, **characterized in that** the cover (31') of the container is removable, that the antenna area is aligned to a diagonal of the container floor and that the container (30') or the cover (31') comprises two loop parts, which run over the container floor or the cover respectively on a diagonal each.

4. Object according to one of claims 1 to 3, **characterized in that** the integrated circuit (23) is arranged in the gap of the antenna loop (5).

5. Object according to claim 4, **characterized in that** the integrated circuit (23) is arranged on a connection piece (6), which connection piece (6) further comprises two loop end regions (5.1 and 5.2) being distanced from each other.

6. Object according to claim 5, **characterized in that** the connection piece (6) is a printed circuit arranged on a flexible or rigid carrier (20), which printed circuit carries at least the integrated circuit (23).

7. Object according to claim 5 or 6, **characterized in that** the loop end regions (5.1 and 5.2) are designed to be sufficiently long as to form one of the loop parts.

8. Object according to one of claims 1 to 7, **characterized in that** the loop (5) consists of a metal tape which is arranged substantially in perpendicular to the antenna area.

## Revendications

1. Objet mobile, comprenant des données mémorisées dans un circuit intégré (23) et une antenne, les données pouvant être lues ou remplacées sans contact par un dispositif de lecture et/ou d'écriture (10) selon une direction de lecture principale (L), l'antenne étant formée comme une boucle d'antenne (5) présentent une solution de continuité entre deux extrémités de boucle, lesdites extrémités de boucle étant reliées au circuit intégré (23), la boucle d'antenne définissant une surface d'antenne et l'objet pouvant être positionné par rapport au dispositif de lecture et/ou d'écriture de manière à ce que la direction de lecture principale (L) coupe la surface d'antenne à angle droit ou non droit, **caractérisé par le fait que** l'objet est un récipient (30, 30') avec un couvercle (31, 31') et qu'une partie de la boucle (5) est disposée sur le couvercle (31, 31') et une autre partie de la boucle (5) sur le récipient (30, 30') de manière à ce que les deux extrémités de boucle sont en contact l'une avec l'autre lorsque le récipient est fermé par le couvercle et que la boucle (5) est interrompue lorsque le récipient n'est pas fermé.

2. Objet selon la revendication 1, **caractérisé par le fait que** le récipient avec son couvercle (30/31, 30'/31') présente un fond rectangulaire ou carré et que la boucle (5) est disposée de manière à ce que la surface d'antenne soit perpendiculaire au fond du récipient et parallèle à deux bords du fond ou suit une diagonale du fond.

3. Objet selon la revendication 2, **caractérisé par le fait que** le couvercle (31') peut être retiré du récipient (30'), que la surface d'antenne est positionnée selon une diagonale du fond et que le récipient (30') ou le couvercle (31') comportent deux parties de boucles disposées respectivement selon les deux diagonales du fond du récipient ou du couvercle.

4. Objet selon l'une des revendications 1 à 3, **caractérisé par le fait que** le circuit intégré (23) est situé dans la solution de continuité de la boucle d'antenne (5).

5. Objet selon la revendication 4, **caractérisé par le fait que** le circuit intégré (23) est situé sur un élément de jonction (6), lequel élément de jonction (6) présente en outre deux zones de connexion à la boucle (5.1 et 5.2) distantes l'une de l'autre.

6. Objet selon la revendication 5, **caractérisé par le fait que** l'élément de jonction (6) est un circuit imprimé sur un support flexible ou rigide (20).

7. Objet selon l'une des revendications 5 ou 6, **caractérisé par le fait que** les zones de connexion à la boucle (5.1 et 5.2) ont une longueur suffisante pour former une des deux parties de boucle.

8. Objet selon l'une des revendications 1 à 7, **caractérisé par le fait que** la boucle (5) est formée d'une bande métallique disposée selon une direction sensiblement perpendiculaire à la surface d'antenne.
